# EUROPEAN PATENT SPECIFICATION

(11) **EP 0 928 880 B1**
(45) Date of publication and mention of the grant of the patent: **01.09.2004**
(21) Application number: 98928540.8
(22) Date of filing: 18.06.1998
(51) Int. Cl.: F01D 5/18

(54) **TIP SHROUD FOR MOVING BLADES OF GAS TURBINE**
DECKBAND FÜR GASTURBINENSCHAUFELSPITZEN
CARENAGE D'EXTREMITE POUR AUBES MOBILES DE TURBINE A GAZ

(30) Priority: 26.06.1997 JP 17018297
(43) Date of publication of application: 14.07.1999
(73) Proprietor: Mitsubishi Heavy Industries, Ltd., Tokyo 100-8315 (JP)
(72) Inventor: AI, Toshishige, Takasago Machinery Works, Hyogo-ken 676 (JP)
(74) Representative: Henkel, Feiler & Hänzel
(86) International application number: PCT/JP1998/002690
(87) International publication number: WO 1999/000584

(56) References cited:
- GB-A- 1 426 049
- JP-A- 3 194 101
- JP-A- 4 047 101
- JP-A- 49 093 712
- JP-A- 57 028 803
- JP-A- 58 047 104
- US-A- 3 876 330
- US-A- 4 948 338
- US-A- 5 460 486
- US-A- 5 482 435
- PATENT ABSTRACTS OF JAPAN vol. 007, no. 128 (M-220), 3 June 1983 (1983-06-03) & JP 58 047104 A (KOGYO GIJUTSUIN;OTHERS: 0J), 18 March 1983 (1983-03-18)

## Description

### TECHNICAL FIELD

The present invention relates to a tip shroud for a gas turbine moving blade as defined by the preamble portion of claim 1 and, more particularly, to a tip shroud for a moving blade, which is used at a downstream stage and made thin and light to have multi-holes therein for cooling purposes, and which is elongated in its creep lifetime by cooling it effectively.

### BACKGROUND ART

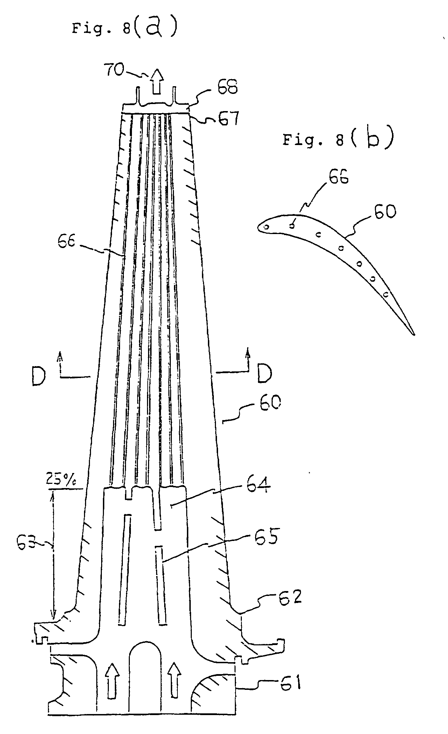

In Fig 8 showing one example of the moving blade of the prior art to be used at a downstream stage of the gas turbine, (a) is a longitudinal section, and (b) is a section taken in the direction of arrows D - D of (a). In order to enhance the effect of cooling the gas turbine which grows hotter and hotter in recent years, there has been adopted a system in which a moving blade to be used at a downstream stage is made thin and light but long and in which multi-holes are formed to feed cooling air to cool the inside of the moving blade. Fig. 8 shows one example of the moving blade, in which reference numeral 60 designates a moving blade, numeral 61 a blade root, and numeral 62 a hub having an internal cavity 64 extending along a hub portion 63 extending over 25% of the total blade length and supported by core supporting ribs 65. Numeral 66 designates a plurality of multi-holes which are formed from the upper portion of the hub portion 63 to a blade end 67, as shown in Fig. 8(b). A tip shroud 68 is mounted on the leading end of the moving blade 60 and has air holes for guiding the cooling air from the multi-holes 66 to release the cooling air 70 to the outside.

In the moving blade 60 thus constructed, the cooling air 70 is guided from the blade root 61 into the cavity 64 to cool the cavity 64 and flows through the multi-holes 66 and the blade end 67 to cool the blade so that it is released, while cooling the tip shroud 68, from the air holes formed in the tip shroud 68 to a combustion gas passage.

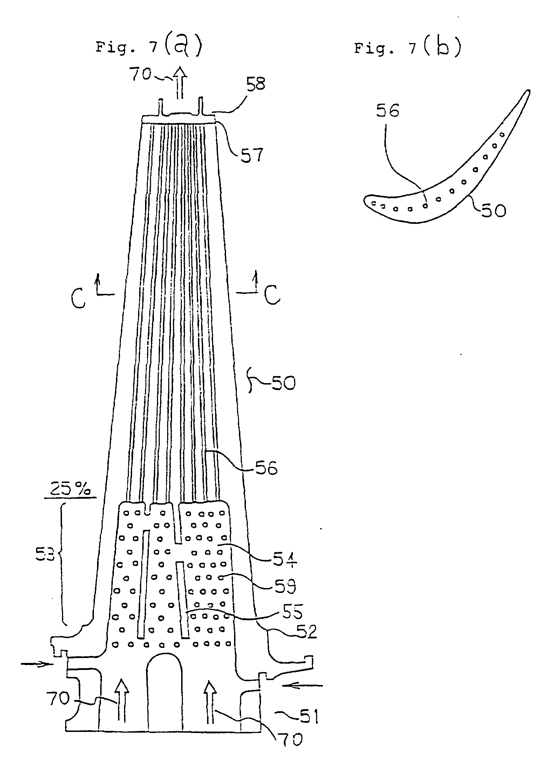

On the other hand, Fig. 7 shows another example of the gas turbine moving blade, which is used at the downstream stage of the gas turbine as in the example of Fig. 8. In Fig. 7, (a) is a longitudinal section, and (b) is a section taken in the direction of arrows C - C of (a). In Fig. 7, reference numeral 50 designates a moving blade, numeral 51 a blade root, and numeral 52 a hub having an internal cavity 54 extending along a hub portion 53 extending over 25% of the total blade length and supported by core supporting ribs 55. Numeral 56 designates a plurality of multi-holes which are formed from the upper portion of the hub portion 53 to a blade end 57. A tip shroud 58 is mounted on the leading end of the moving blade 50. These structures are identical to those of the example shown in Fig. 8. In the example of Fig. 7, however, a number of pin fins 59 are provided in the cavity 54 projecting from the two inner wall faces or connected to the two inner wall faces.

In the moving blade 50 thus constructed, the cooling air 70 flows from the blade root 51 into the cavity 54, and its flow is disturbed by the pin fins 59 to enhance the thermal conductivity and accordingly the cooling efficiency of the internal cooling air in the hub portion 53. After this, the cooling air 70 flows through the multi-holes 56 to the blade end 57 to cool the blade 50 and the tip shroud 58 and is released from the air holes formed in the tip shroud 58 to the combustion gas passage.

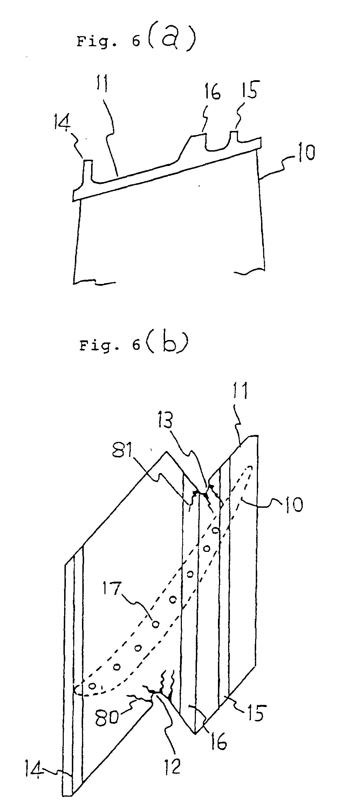

As described hereinbefore, the moving blade to be used at the downstream stage of the gas turbine is made light and long, and its tip shroud is shaped to be exposed to the hot gas so that it is liable to crack. In Fig. 6 showing the moving blade and the tip shroud, (a) is a side elevation, and (b) is a top plan view of the tip shroud. On the leading end of a moving blade 10, as shown in Fig. 6(a), there is mounted a tip shroud 11, which is provided with flanges 14 and 15 at its two end portions and a flange 16 at its central portion. However, the tip shroud 11 has such portions at its circumferential end portions as are liable to have a concentrated thermal stress..

Fig. 6(b) is a top plan view of the aforementioned tip shroud. At the two circumferential sides of the tip shroud 11, there are cut-off portions 12 and 13 which have curved peripheries. These cut-off portions 12 and 13 are exposed to the hot gas so that the thermal stress is liable to be concentrated to cause cracks 80 and 81, as shown. Therefore, these portions have to be cooled to reduce the metal temperature as much as possible. However, these portions are so distant from the passage of the cooling air flowing out of air holes 17 of the moving blade 10 that they are hardly reached by the cooling air.

GB-A-1426049, on which the preamble portion of claim 1 is based, discloses a rotor blade for a gas turbine engine which is provided with a cap overlying at least the majority of the terminations of the cooling passages at the tip of the air foil blade. A duct portion defined by the cap is directed perpendicularly to the blade axis in a direction such that spent cooling air flowing from the duct provides a force on the blade including a component in the direction which augments the normal driving force on the blade during operation.

US-A-5 482 435 discloses a gas turbine blade with a cooled tip shroud. The tip shroud appears to be integrally formed with the air foil to which it is connected and includes two interior shroud cooling air holes extending outwardly from a central supply hole towards radially inward and outward facing surfaces. This known cooling structure is interior of the tip shroud and cannot be applied to existing tip shroud designs without substantial amendment.

US-A-3 876 330 discloses a moving blade tip shroud in which a cooling air flow is created in a similar direction as in GB-A-1 426 049. A hollow shroud cap is said to be brazed in position over the holes.

JP-A-03-194101 discloses a moving blade tip shroud with a cooling structure for cooling the interior of the tip shroud as such. To this end the tip shroud is provided with plural internal cooling passages supplied with cooling air from cooling passages provided in the air foil through a communication hole. After circulation in the tip shroud for cooling the same the air is discharged through a discharge hole provided on the outer surface of the tip shroud upper surface.

### DISCLOSURE OF THE INVENTION

It is an object of the invention to provide a gas turbine moving blade tip shroud for guiding cooling air received from a gas turbine moving blade in which the metal temperature of cut-off portions or the concentrated stress portions can be reduced and a creep lifetime of the tip shroud is extended.

According to the present invention there is provided a gas turbine moving blade tip shroud as defined in claim 1 for guiding cooling air received from a gas turbine moving blade.

According to the invention, the guide cover is mounted on the high stress portion of the tip shroud and encloses a portion of the air holes in the upper face of the tip shroud. The guide cover has at its one end the opening which is directed to feed the cooling air toward the portion liable to receive the influence of the hot combustion gas. This portion is cooled with the cooling air passing it so that the metal temperature rise is suppressed to prevent cracks due to the thermal stress. In the tip shroud of the moving blade to be used at the downstream stage of the gas turbine, the portion liable to be influenced by the hot combustion gas is located at the cut-off portions having the peripheries curved at the circumferential end portions. If these cut-off portions are opened for the upper guide covers thereby to effect the outflow of the cooling air, the rise of the metal temperature is reduced so that they can be prevented from cracking.

### BRIEF DESCRIPTION OF THE DRAWINGS

In Fig. 1 showing a tip shroud of a gas turbine moving blade according to one embodiment of the invention, (a) is a top plan view, and (b) is a side elevation;
Fig. 2 is a section taken in the direction of arrows A - A of Fig. 1;
Fig. 3 is a section taken in the direction of arrows B - B of Fig. 1;
In Fig. 4 showing one cooling guide cover used in the tip shroud of the gas turbine according to the embodiment of the invention, (a) is a top plan view, (b) is a side elevation of a sealed portion, and (c) is a longitudinal side elevation;
In Fig. 5 showing the other cooling guide cover used in the tip shroud of the gas turbine according to the embodiment of the invention, (a) is a top plan view, (b) is a side elevation of a sealed portion, and (c) is a longitudinal side elevation;
In Fig. 6 showing a gas turbine moving blade and a tip shroud of the prior art, (a) is a side elevation, and (b) is a top plan view of the tip shroud;
In Fig. 7 showing the gas turbine moving blade of the prior art, (a) is a longitudinal section, and (b) is a section taken in the direction of arrows C - C of (a); and
In Fig 8 showing another example of the gas turbine moving blade of the prior art, (a) is a longitudinal section, and (b) is a section taken in the direction of arrows D - D of (a).

### BEST MODE FOR CARRYING OUT THE INVENTION

An embodiment of the invention will be specifically described with reference to the accompanying drawings.

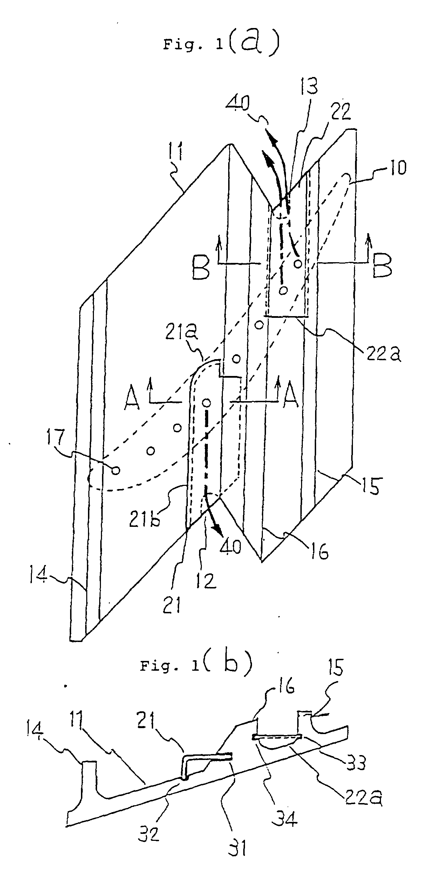

In Fig. 1 which shows a tip shroud of a gas turbine moving blade according to one embodiment of the invention, (a) is a top plan view, and (b) is a side elevation. In Fig. 1, reference numeral 10 designates a moving blade having a tip shroud 11. Numeral 17 designates a plurality of air holes which extend through the tip shroud 11 and communicate with the multi-holes of the moving blade 10.

Numerals 12 and 13 designate cut-off portions which are curved at their peripheries in the two circumferential end peripheries of the tip shroud 11 such that they are most subjected to thermal influences when hot combustion gas passes the curved portions. Numerals 14, 15 and 16 designate flanges on the upper face of the tip shroud. These structures are identical to those of the prior art. In the invention, as shown in Fig. 1(b), grooves 31 and 32 are worked in the side of one end of the tip shroud and grooves 33 and 34 are worked in the opposite side. A cooling guide cover 21 is inserted and soldered at its two ends in the grooves 31 and 32, and another cooling guide cover 22 is mounted in the grooves 33 and 34.

The cooling guide cover 21 covers one of the air holes 17 communicating with the multi-holes of the moving blade 10 and is worked to be closed at its inner side by a member 21a and at its side face by a member 21b and opened at its outer side. On the other hand, the cooling guide cover 22 also covers two of the air holes 17 communicating with the multi-holes of the moving blade 10 and is worked to be closed at its inner side by a member 22a and to be opened at its outer side.

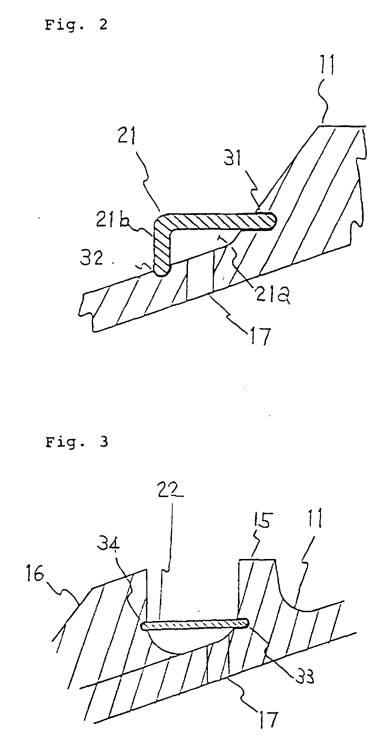

Fig. 2 is a section taken in the direction of arrows A - A of Fig. 1 and shows the mounted state of the cooling guide cover 21. As shown, the grooves 31 and 32 are worked in the tip shroud 11, and the cooling guide cover 21 is fitted at its end portions in those grooves to cover the air hole 17 and is shaped to be closed at its inner side by the member 21a and at its side face by the member 21b.

Fig. 3 is a section taken in the direction of arrows B - B of Fig. 1 and shows the state in which the other cooling guide cover 22 is mounted. As shown, the grooves 33 and 34 are worked in the confronting faces of the flanges 15 and 16 of the tip shroud 11, and the cooling guide cover 22 is fitted and mounted at its two ends between the grooves 33 and 34 to cover the air holes 17.

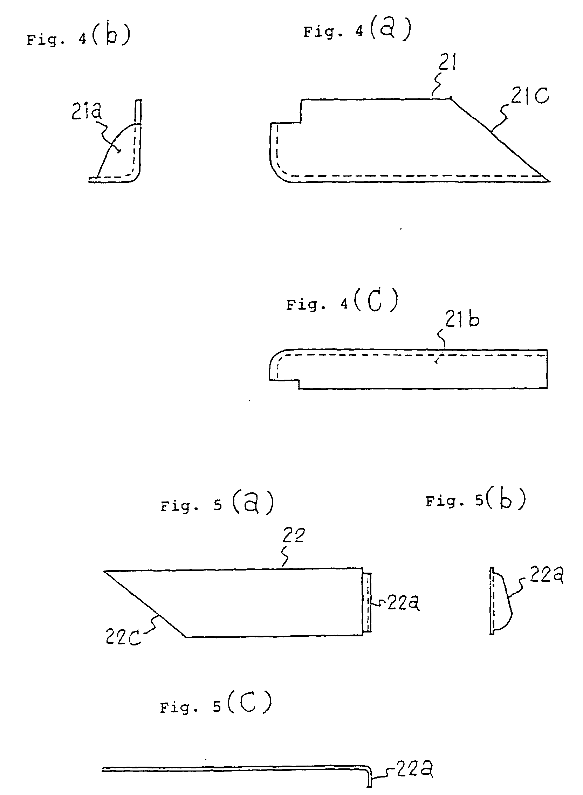

In Fig. 4 showing the structure of the aforementioned cooling guide cover 21, (a) is a top plan view, (b) is a side elevation of the sealed portion, and (c) is a longitudinal side elevation. As shown, the cooling guide cover 21 is worked into a cover which is shaped to seal its faces to confront the tip shroud 11 with the members 21a and 21b, respectively, but to open one side 21c.

In Fig. 5 also showing the other cooling guide cover 22, (a) is a top plan view, (b) is a side elevation of the sealed portion, and (c) is a longitudinal side elevation. As shown, the other cooling guide cover 22 is worked and shaped to close the space, as formed by the flanges 15 and 16 of the tip shroud 11 in conformity to the curved shape of the inner side, with the member 22a and the space, as formed by the flanges 15 and 16, with a flat-shaped cover, but to open one side 22c.

According to the tip shroud of the gas turbine moving blade of the embodiment thus far described, the cooling air from the air hole 17 can be guided to one cut-off portion 12 by mounting the cooling guide cover 21 on one side of the upper face of the tip shroud 11, and the cooling air from the air holes 17 can be guided to flow to the other cut-off portion 13 by mounting the cooling guide cover 22 on the other side.

As shown in Fig. 1, more specifically, cooling air 40 from the moving blade 10 flows out of the air holes 17 to the upper face of the tip shroud 11 and further from the inside, as closed with the cooling guide cover 21, through the opening 21c so that it cools the surface of the cut-off portion 12 until it finally flows to the outside. On the other hand, the cooling air 40 having flown out from the air holes 17 into the other cooling guide cover 22 flows to the opposite side, as closed with the member 22a, and further flows out from the opening 22c so that it cools the cut-off portion 13 until it finally flows to the outside.

The cut-off portions 12 and 13 of the tip shroud 11, which provide the passages for the hot combustion gas so that the thermal stress is concentrated, are exposed to the cooling air so that their metal temperature can be reduced to a low level to elongate the creep lifetime of the tip shroud 11.

Since the cut-off portions 12 and 13 are provided with the cooling guide covers 21 and 22 to guide the cooling air to flow out from their openings, the hot combustion gas having passed the curved cut-off portions 12 and 13 of the adjoining tip shrouds in the prior art is blocked in the invention by the cooling air so that the hot combustion gas is throttled. This further enhances the effect for those portions to suppress the temperature rise.

## Claims

1. A gas turbine moving blade tip shroud for guiding cooling air received from a gas turbine moving blade (10), said gas turbine moving blade tip shroud (11) comprising:
a plurality of air holes (17) formed in the tip shroud (11), said air holes (17) opening at a radial outer face of said tip shroud (11) and being adapted to communicate with air holes of the gas turbine moving blade (10) when the tip shroud is mounted on the moving blade; and
**characterized by** at least one cooling air guide cover (21;22) mounted on said radial outer face of said tip shroud (11) so as to cover at least one of said air holes (17) and to define a space between said radial outer face of said tip shroud (11) and said guide cover (21;22) for guiding cooling air from said at least one of said air holes (17) to a cut-off portion (12;13) at the circumferential end portion of the tip shroud, wherein opposite edge portions of said guide cover (21;22) are received in a pair of grooves (31,32;33,34) formed in the radial outer face of said tip shroud (11).

2. The gas turbine moving blade tip shroud as claimed in claim 1, wherein said pair of grooves (33,34) are formed in confronting sides of a pair of flanges (15,16) formed on said radial outer face of said tip shroud (11).

3. The gas turbine moving blade tip shroud as claimed in claim 1 or 2, wherein said guide cover (21;22) is flat-shaped.

4. The gas turbine moving blade tip shroud as claimed in claim 1, 2 or 3, wherein said guide cover (21;22) comprises one or more side member(s) (21a,21b;22a) shaped for closing one or more sides of said space defined between said radial outer face of said tip shroud (11) and said guide cover (21;22) except for one side facing towards said cut-off portion (12; 13).

5. The gas turbine moving blade tip shroud as claimed in claim 1, 2, 3 or 4, comprising two cooling air guide covers (21;22) respectively defining a space between said radial outer face of said tip shroud (11) and the respective guide cover (21;22) for independently guiding cooling air to cut-off portions (12;13) located at opposite sides of the circumferential end portion of the tip shroud.

## Patentansprüche

1. Gasturbinenlaufschaufel-Außendeckring zum Leiten von von einer Gasturbinen-Laufschaufel (10) aufgenommener Kühlluft, wobei der Gasturbinenlaufschaufel-Außendeckring (11) umfasst:
mehrere in dem Außendeckring (11) ausgebildete Luftlöcher (17), wobei die Luftlöcher (17) an einer radialen Außenfläche des Außendeckrings (11) münden und so ausgelegt sind, dass sie mit Luftlöchern der Gasturbinen-Laufschaufel (10) kommunizieren, wenn der Außendeckring an der Laufschaufel angebracht ist, und
**gekennzeichnet durch** mindestens eine Kühlluft-Leitabdeckung (21;22), die an der radialen Außenfläche des Außendeckrings (11) so angebracht ist, dass sie mindestens eines der Luftlöcher (17) bedeckt und einen Zwischenraum zwischen der radialen Außenfläche des Außendeckrings (11) und der Leitabdeckung (21;22) festlegt, um Kühlluft von dem mindestens einen der Luftlöcher (17) zu einem abgeschnittenen Abschnitt (12;13) an dem umfangsmäßigen Endabschnitt des Außendeckrings zu leiten, wobei gegenüberliegende Randabschnitte der Leitabdeckung (21;22) in einem Paar Nuten bzw. Rillen (31,32;33,34) aufgenommen sind, welche in der radialen Außenfläche des Außendeckrings (11) ausgebildet sind.

2. Gasturbinenlaufschaufel-Außendeckring nach Anspruch 1, wobei das Paar Nuten bzw. Rillen (33,34) in einander zugewandten Seiten eines Paars an der radialen Außenfläche des Außendeckrings (11) ausgebildeter Flansche (15,16) ausgebildet sind.

3. Gasturbinenlaufschaufel-Außendeckring nach Anspruch 1 oder 2, wobei die Leitabdeckung (21;22) flach geformt ist.

4. Gasturbinenlaufschaufel-Außendeckring nach Anspruch 1, 2 oder 3, wobei die Leitabdeckung (21;22) ein oder mehrere Seitenelement(e) (21a,21b;22a) umfasst, das/die zum Verschließen einer oder mehrerer Seiten des zwischen der radialen Außenfläche des Außendeckrings (11) und der Leitabdeckung (21;22), außer einer dem abgeschnittenen Abschnitt (12;13) zugewandten Seite, geformt ist/sind.

5. Gasturbinenlaufschaufel-Außendeckring nach Anspruch 1, 2, 3 oder 4, mit zwei Kühlluft-Leitabdeckungen (21;22), die jeweils einen Zwischenraum zwischen der radialen Außenfläche des Außendeckrings (11) und der jeweiligen Leitabdeckung (21;22) festlegen, um unabhängig voneinander Kühlluft zu abgeschnittenen Abschnitten (12;13) zu leiten, die sich an entgegengesetzten Seiten des Umfangsendabschnitts des Außendeckrings befinden.

## Revendications

1. Carénage d'extrémité d'aube mobile de turbine à gaz pour guider de l'air de refroidissement reçu d'une aube (10) mobile de turbine à gaz, le carénage (11) d'extrémité d'aube mobile de turbine à gaz comprenant:
une pluralité de trous (17) pour de l'air formé dans le carénage (11) d'extrémité, les trous (17) pour de l'air débouchant sur une face radialement extérieure du carénage (11) d'extrémité et étant aptes à communiquer avec des trous pour de l'air de l'aube (10) mobile de turbine à gaz lorsque le carénage d'extrémité est monté sur la l'aube mobile;
**caractérisé par** au moins un couvercle (21, 22) de guidage de l'air de refroidissement, monté sur la face extérieure radialement du carénage (11) d'extrémité de manière à recouvrir au moins l'un des trous (17) pour de l'air et à définir un espace entre la face extérieure radialement du carénage (11) d'extrémité et le couvercle (21, 22) de guidage dudit au moins un des trous (17) pour de l'air à une partie (12, 13) découpée à la partie d'extrémité circonférentielle du carénage d'éxtrémité, des parties opposées de bords du couvercle (21, 22) de guidage étant reçues dans une paire de gorges (31, 32, 33, 34) formées dans la face extérieure radialement du carénage (11 ) d'extrémité.

2. Carénage d'extrémité d'aube mobile de turbine à gaz suivant la revendication 1, dans lequel la paire de gorges (33, 34) est formée dans des côtés en regard d'une paire de rebords (15, 16) formés sur la face extérieure radialement du carénage (11 ) d'extrémité.

3. Carénage d'extrémité d'aube mobile de turbine à gaz suivant la revendication 1 ou 2, dans lequel le couvercle (21, 22) de guidage est de forme plate.

4. Carénage d'extrémité d'aube mobile de turbine à gaz suivant la revendication 1, 2 ou 3, dans lequel le couvercle (21, 22) de guidage comprend un ou plusieurs éléments (21a, 21b, 22a) latéraux conformés pour fermer un ou plusieurs côtés de l'espace défini entre la face extérieure radialement du carénage (11) d'extrémité et le couvercle (21, 22) de guidage, excepté le côté faisant face à la partie (12, 13) découpée.

5. Carénage d'extrémité d'aube mobile de turbine à gaz suivant la revendication 1, 2, 3 ou 4, comprenant deux couvercles (21, 22) de guidage de l'air de refroidissement, définissant respectivement un espace entre la face extérieure radialement du carénage (11) d'extrémité et le couvercle (21, 22) de guidage respectif pour guider indépendamment de l'air de refroidissement vers les parties (12, 13) découpées disposées sur des côtés opposés de la partie d'extrémité circonférentielle du carénage d'extrémité.
